# EUROPEAN PATENT APPLICATION

(11) **EP 2 750 334 A1**
(43) Date of publication of application: **02.07.2014**
(21) Application number: 13180516.0
(22) Date of filing: 15.08.2013
(51) Int. Cl.: H04L 12/28

(54) **Network system and network connection device**

(30) Priority: 25.12.2012 JP 2012280540
(71) Applicant: Toshiba Lighting & Technology Corporation, Yokosuka-shi Kanagawa 237-8510 (JP)
(72) Inventor: Nakagawa, Tatsuya, Kanagawa, 237-8510 (JP)
(74) Representative: Bokinge, Ole

(57) **Abstract**

A network system includes a device adapter including a first virtual communication port, and a network connection device including a virtual device adapter protocol hierarchy which includes a second virtual communication port communicable with the first virtual communication port, a TCP/IP layer, a device controlling protocol layer in an application layer and a device object.

## Description

### CROSS-REFERENCE TO RELATED APPLICATIONS

This application is based upon and claims the benefit of priority from the prior Japanese Patent Application No. 2012-280540, filed on December 25, 2012, the entire contents of which are incorporated herein by reference.

### FIELD

Embodiments described herein relate generally to a small-scale network system and a network connection device used for the same.

### BACKGROUND

Formerly, a middleware adapter (device adapter) in a small-scale network such as ECHONET (registered trademark) includes a device interface driver (I/F driver), a device object processing part, a packet processing part of ECHONET, a UDP/IP processing part and a transmission media (medium) processing part.

For example, hitherto, the middleware adapter (device adapter, etc.) itself includes the device interface driver (I/F driver), the device object processing part, the packet processing part of ECHONET and the UDP/IP processing part. In order to mount these processing parts, memories such as RAM/ROM are required. Besides, in order to perform a data conversion process at high speed, a high-performance CPU is required. As described above, the device adapter of the related art requires the large-capacity and high-performance hardware resources.

### BRIEF DESCRIPTION OF THE DRAWINGS

FIG. 1 is a structural view for explaining a network system according to a first embodiment.
FIG. 2 is a structural view for explaining a network connection device, a device adapter and a device communication protocol according to the first embodiment.
FIG. 3 is a structural view for explaining a network system according to a second embodiment.
FIG. 4 is a structural view for explaining a communication protocol in a network connection device according to the second embodiment.
FIG. 5 is a structural view for explaining a device adapter and a device communication protocol according to a third embodiment.
FIG. 6 is a view for explaining capsulization according to a fourth embodiment.

### DETAILED DESCRIPTION

In view of the above circumstances, according to one embodiment, a network and a network connection device are provided in which hardware resources can be reduced without lowering the communication performance of the network.

According to one embodiment, a network system includes a device adapter including a first virtual communication port, and a network connection device including a virtual device adapter protocol hierachy. The virtual device adapter protocol hierarchy includes i) a second virtual communication port communicable with the first virtual communication port, ii) a TCP/IP layer, iii) a device controlling protocol layer in an application layer and iv) a device object.

Besides, according to another embodiment, a network connection device includes a virtual device adapter protocol hierarchy. The virtual device adapter protocol hierarchy includes i) a second virtual communication port communicable with a first virtual communication port of a device adapter, ii) a TCP/IP layer, iii) a device controlling protocol layer in an application layer and iv) a device object.

According to the network system and the network connection device of the above respective embodiments, hardware resources can be reduced.

Hereinafter, embodiments will be described with reference to the drawings.

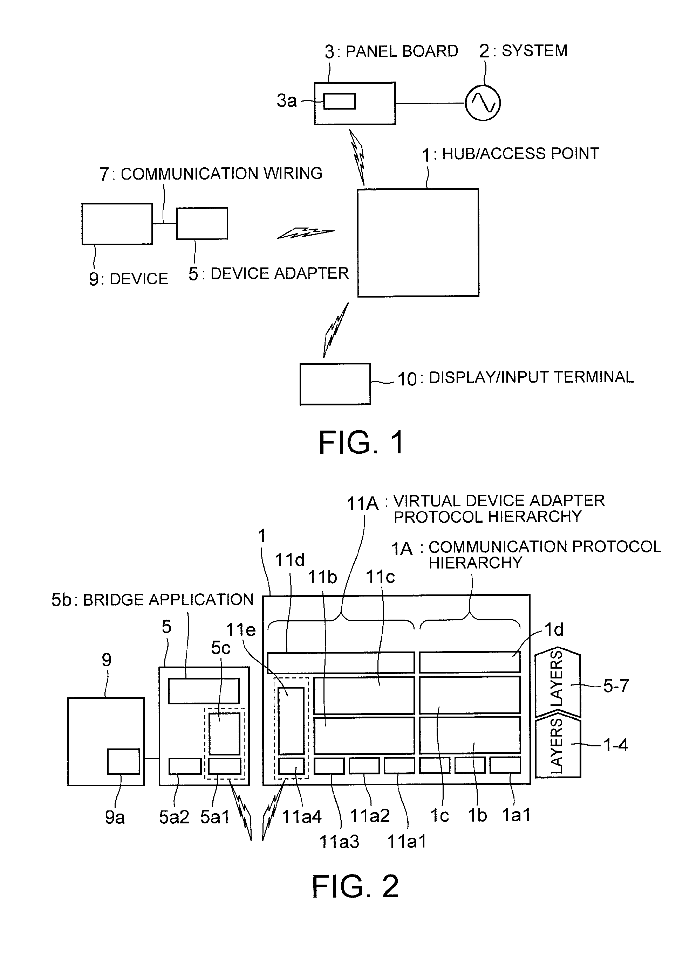

FIG. 1 is a structural view for explaining a small-scale network system according to a first embodiment. Reference numeral 1 denotes a hub or an access point (network connection device) in this network system and is represented as hub/ access point. A panel board 3 is connected to an electric power system 2. A device adapter 5 is connected to a device 9 through a communication wiring 7. A display and/or input terminal 10 is used for displaying an operation state and power consumption of the device 9 and/or is used for controlling the device 9.

The hub/access point 1 and the panel board 3, the hub/ access point 1 and the device adapter 5, and the hub/ access point 1 and the display/input terminal 10 can communicate with each other. A communication unit may be wireless or wired. FIG. 1 shows an example in which communication by wireless connection is performed for any of these. Besides, the communication between the device adapter 5 and the device 9 can also be performed by wireless communication without using the communication wiring 7.

As the small-scale network system, there are various systems such as a home network system, a collective housing network system, an in-building network system, a business network system such as POS or CD, a monitor control network system, a cable TV network system, and a vehicle network system. Hereinafter, a description will be made while using an in-house network system as an example. Incidentally, the in-house network system is a communication network system for providing services according to various needs, such as network home electric appliances, home security, all electrification, and power-saving support.

The hub/ access point 1 is a device for configuring the small-scale network system. For example, when energy monitor service is provided by the in-house network system, the hub/ access point 1 is connected to a power measuring unit 3a in the panel board 3, receives power consumption amount data, and generates monitor display data to be provided to the user based on the received data. The hub/ access point 1 transmits the generated monitor display data to the display/input terminal 10.

Alternatively, when similar energy monitor service is provided, the hub/ access point 1 is connected via Internet to an external server such as a cloud server (not shown) existing outside the in-house network system shown in FIG. 1, and performs required protocol conversion to the data received from the power measuring unit 3a. Then, the hub/ access point transmits the data to the Internet server, acquires monitor display data generated by the external server, and transmits the data to the display/input terminal 10. The monitor display data generated by the external server can also be displayed on a mobile display terminal or an input terminal, such as a smartphone, via Internet. By doing so, the service can be used from the outside of the house.

In another example, when the energy monitor/control service is provided using the in-house network system, the hub/ access point 1 collects the operation state of the device 9 through the device adapter 5, and transmits it to the display terminal 10. Further, the hub/ access point 1 transmits a control signal, which corresponds to request inputted to the input terminal 10 by the user and is a control signal of the device 9, to the device adapter 5. Alternatively, the hub/ access point 1 acquires a control signal, which corresponds to request inputted to the mobile terminal by the user at the outside of the house, from the external server, and transmits the signal as the control signal of the device 9 to the device adapter 5. The device adapter 5 operates according to the received control signal.

The panel board 3 is the device for safely supplying the power from the system 2 to the house, and includes an earth leakage breaker, a safety breaker, a current breaker and the like. The panel board 3 further includes the power measuring unit 3a, and the power measuring unit 3a can measure the power consumption amount of each device, such as the electric device 9, connected to a branching destination. In FIG. 1, the power wiring between the panel board 3 and the device 9 is omitted in order to avoid complication. Besides, the power measuring unit 3a is placed outside the housing of the panel board 3, and a voltage value or current value for measuring the power consumption amount may be received from the panel board 3 through a wireless or wired communication unit.

The device adapter 5 can communicate with the hub/ access point 1 and the device 9, and has a function to receive a request from the hub/ access point 1, to request and receive various required data to and from the device 9, and to transmit the received data to the hub/ access point 1. The various data include, for example, state notification of the device 9.

The device 9 may be an electric device mainly consuming power, for example, white goods such as an air conditioner, a luminaire, floor heating, a water heater, a door phone, a battery or an electric car, or may be a device to generate power such as a solar cell, a battery or an electric car. The display/input terminal 10 is a PC, a dedicated monitor or a mobile display terminal such as a smartphone.

FIG. 2 is a structural view for explaining a communication protocol in the hub/ access point 1, the device adapter 5 and the device 9 of the network system of the first embodiment. The hub/ access point 1 includes a communication protocol hierarchy 11A of the device adapter in addition to a communication protocol hierarchy 1A intrinsic to the hub/ access point. In the following, the adapter communication protocol hierarchy 11A in the hub/access point 1 is called a virtual device adapter protocol hierarchy.

The communication protocol hierarchy 1A and the virtual device adapter protocol hierarchy 11A can be respectively roughly divided into first to fourth layers and fifth to seventh layers from a lower layer to a higher layer. The structure of the hierarchy can be suitably changed according to the protocol to be used, and the hierarchy structure described below is an example.

The protocol hierarchy 1A includes drivers 1a1, · · · of various transmission media for communicating with the adjacent network device, and includes virtual device adapter protocol hierarchy 11A and the display/input device 10. As various transmission media, there are, for example, BLUETOOTH (registered trademark), Wi-Fi (registered trademark), Ethernet (registered trademark) and 920 MHz band communication.

Besides, the second to fourth layers 1b on the drivers 1a1, · · · of the transmission media includes a short distance wireless network communication layer called PAN (Personal Area Network) or WPAN, a media access control layer (MAC), a TCP/IP (Transmission Control Protocol / Internet Protocol) layer and the like. Further, the fifth to seventh layers of the communication protocol hierarchy 1A includes an application layer 1d of the hub/ access point 1 in addition to a device controlling protocol layer 1c.

The first layer of the virtual device adapter protocol hierarchy 11A includes drivers 11a1, 11a2, 11a3, · · · for transmission media used for communication with the hub/ access point 1. The transmission media in communication with the hub/ access point 1 are, for example, BLUETOOTH, Wi-Fi, Ethernet, 920 MHz band communication and the like.

The first layer of the virtual device adapter protocol hierarchy 11A further includes a driver 11a4 of a transmission medium used for communication with the device adapter 5. Various wireless/wired communication can be used for communication by the transmission medium driver 11a4. A virtual communication driver 11e is provided on the transmission medium driver 11a4, and both can constitute a virtual communication port (in the drawing, a portion surrounded by a broken line frame).

Incidentally, if a communication protocol similar to the communication between the device adapter 5 and the device 9 is used in the virtual communication driver 11e, protocol conversion in the device adapter 5 becomes unnecessary, and this is desirable. For example, when serial communication by UART is used as communication between the device adapter 5 and the device 9, the serial communication by UART (Universal Asynchronous Receiver Transmitter) is desirably used also between the hub/ access point 1 and the device adapter 5. When UART is used, the driver 11e is the virtual UART driver.

When the serial communication protocol is placed on the transmission medium, the virtual communication driver 11e is used for the serial communication, and the virtual communication driver 11e and the transmission medium driver 11a4 can constitute the virtual communication port. This virtual communication port enables communication with a virtual communication port of the device adapter 5 constituted by a transmission medium driver 5a1 and a virtual communication driver 5c. For example, when BLUETOOTH is used as the transmission medium, UART can be made wireless by BLUETOOTH in the virtual communication port. Besides serial communication other than UART can also be used. Also, a protocol different from the communication protocol between the device 9 and the device adapter 5 may be used. In that case, software and hardware resources for conversion are required in the device adapter 5.

The second to fourth layers 11b of the virtual device adapter protocol hierarchy 11A include a TCP/IP layer, and can include a short distance wireless network communication layer called PAN or WPAN, a media access control layer (MAC), and the like.

The fifth to seventh layers of the virtual device adapter protocol hierarchy 11A include an adapter application layer 11d such as a device object, in addition to a device controlling protocol layer 11c in an application layer of ECHONET or ECHONET Lite (registered trademark). Here, the device object is a structure (instance) relating to an object, a method (operation, behavior) or the like.

According to this embodiment, the virtual device adapter protocol hierarchy 11A is provided in the hub/ access point 1. Thus, as compared with the device adapter of the related art, the hardware resources can be reduced. Specifically, the device adapter 5 merely includes a specific transmission medium driver 5a1 to enable communication with the hub/ access point 1, the virtual communication driver 5c, a transmission medium driver 5a2 to enable communication with the device 9, and a bridge application 5b for connecting these. This can omit the TCP/IP layer and the like, which existed in the device adapter 5 in the related art, or can omit a device controlling protocol layer in an application layer in small-scale Internet, an application layer of a device object, and the like.

The device adapter of the related art requires a large-capacity memory for RAM or ROM in order to perform the processes of these layers, and requires a CPU having high-speed processing performance. When the TCP/IP layer, the device control protocol layer, the device object and the like are moved from the device adapter 5 to the hub/ access point 1 as in this embodiment, the hardware of the device adapter 5 can be greatly reduced. By this, the inexpensive device adapter 5 can be provided. Besides, the hub/ access point 1 originally uses a large memory capacity and a high speed CPU as compared with the device adapter 5 in order to realize the original hub/ access point function. Thus, the increase of hardware resources required by the addition of the virtual device adapter protocol hierarchy 11A can be relatively easily absorbed.

In this embodiment, communication by BLUETOOTH SPP (Serial Port Profile) is desirably used between the device adapter 5 and the device 9. By this, the inexpensive and simple system using a commercially available BLUETOOTH SPP module can be provided. That is, since the commercially available BLUETOOTH SPP module is normally provided with the virtual communication port (in the drawing, the portion surrounded by the broken line) constituted by the BLUETOOTH driver 5a1 and the virtual communication driver 5c, the bridge application 5b, and the transmission medium driver 5a2, the device adapter 5 can be easily configured. As the communication module as stated above, there is also a 920 MHz band module. Accordingly, the 920 MHz band communication is also desirably used as the transmission media.

In this embodiment, when the device 9 supports, for example, UART communication as the communication medium with the outside, the virtual communication driver 11e of the virtual device adapter protocol hierarchy 11A can be made the virtual UART driver. In this case, the device adapter 5 includes the virtual UART driver 5c which understand the UART protocol of the hub/ access point 1. By the structure as stated above, communication between the hub/ access point 1 and the device adapter 5 and communication between the device adapter 5 and the device 9 are made to use the same kind of communication system, the conversion process in the device adapter 5 can be avoided, which is desirable for reduction.

In this case, information transmitted from the transmission medium driver 11a4 is received by the transmission medium driver 5a1. And then, the information is interpreted by the virtual UART driver 5c, and is transmitted from the UART driver 5a2 to the UART driver 9a of the device 9 via the bridge application 5b. The information transmitted to the UART 9a is interpreted in the inside of the device 9, and is executed.

When the communication between the hub/ access point 1 and the device adapter 5 is realized by wireless, as compared with wired communication, the communication is unstable. Hitherto, since the device adapter protocol hierarchy is installed on the device adapter, when the connection with the hub/ access point is disconnected, an event that an operation is impossible due to the disconnection can not be notified to the hub/ access point from the device adapter.

On the other hand, according to this embodiment, since the virtual device adapter protocol hierarchy 11A is provided, notification that an operation is impossible due to the disconnection of communication with the device adapter 5 can be notified to the hub/ access point 1 and/or other virtual adapters. The hub/ access point 1 receiving this notification transmits the notification content to, for example, the display/control terminal 10, and can notify the user that the device 5 is in the state of being disconnected from the network.

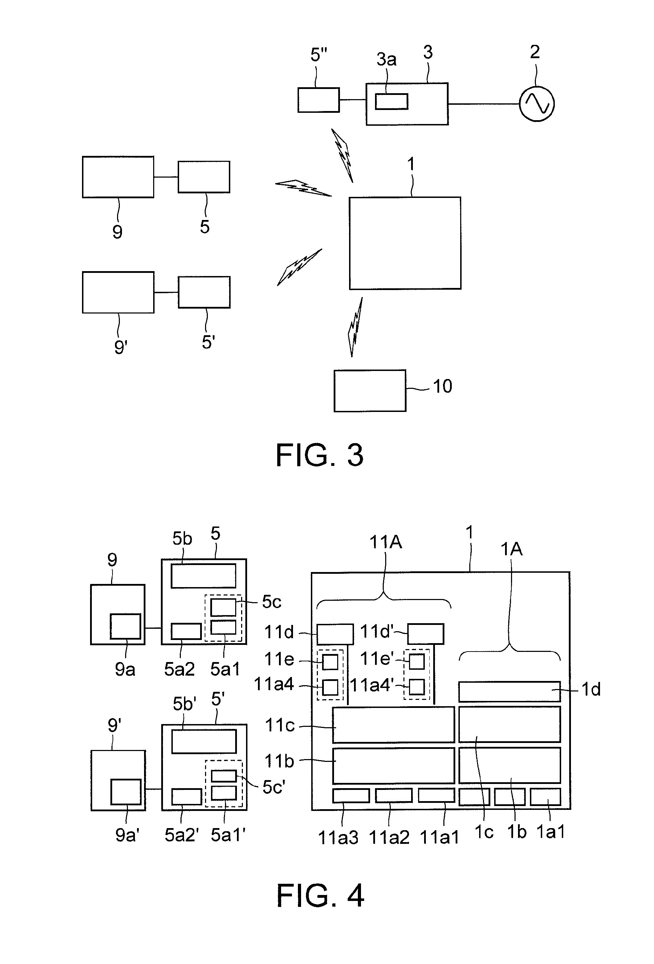

Next, a network system of a second embodiment of the invention will be described. The same points as those of the first embodiment are omitted, and different points will be mainly described. FIG. 3 is a structural view for explaining the network system of the second embodiment. In the network system of the first embodiment, the one device adapter 5 is provided for the hub/ access point 1. In the second embodiment, the network system includes plural device adopters 5 and 5'. In network system as stated above, a virtual device adapter protocol hierarchy 11A corresponding to the plural device adapters 5 and 5' is provided in a hub/ access point 1.

In FIG. 3, devices 9 and 9' are the same kind or different kind of electric devices, and the respective electric devices 9 and 9' are provided with the corresponding device adapters 5 and 5'. Besides, the number of the devices may be two or more, and the number can be increased according to needs. Besides, in FIG. 3, a device adapter 5" separate from a power measurement unit 3a is provided, so that measurement data of the power measurement unit 3a is communicable with the hub/ access point 1.

When the plural device adapters 5 are provided for the hub/ access point 1, the virtual device adapter protocol hierarchy 11A can be increased in the hub/ access point 1 according to the number of the device adopters 5. For example, when five device adopters 5 are provided in the network, five communication protocol hierarchies 11A can be provided in the hub/ access point 1.

However, if the communication protocol hierarchies 11A, the number of which is equal to the number of the device adopters 5, are used in the hub/ access point 1, the required resources increase simply in proportion to the number of the device adopters 5. Then, if the hierarchies are made common as much as possible in the hub/ access point 1, the hub/ access point 1 can be reduced (simplified).

FIG. 4 is a software structural view for explaining the reduced hierarchy structure of the hub/ access point 1. That is, in the virtual device adapter protocol hierarchy 11A, hierarchies which can be made common among the device adapters are made common. A set of a transmission medium driver 11a4, a virtual communication driver 11e and an adapter application layer 11d is formed corresponding to each device adapter and a plurality of such sets are provided in the hub/ access point 1. The number of the sets is equal to the number of the device adopters 5. The transmission medium driver 11a4, the virtual communication driver 11e, and the adapter application layer 11d are for communication with the device adapter 5. A transmission medium driver 11a4', a virtual serial communication driver 11e', and an adapter application layer 11d' are for communication with the device adapter 5' connected with the device 9'.

By doing so, the communication transmission medium drivers 11a1, 11a2 and 11a3 of the hub/ access point 1, and also the short distance wireless network communication layer called PAN or WPAN, the media access control layer (MAC) and the TCP/IP layer, included in 11b, and further, the device controlling protocol layer 11c in the application layer, and the like can be made common among the virtual device adapters. By this, the hub/ access point 1 can be reduced.

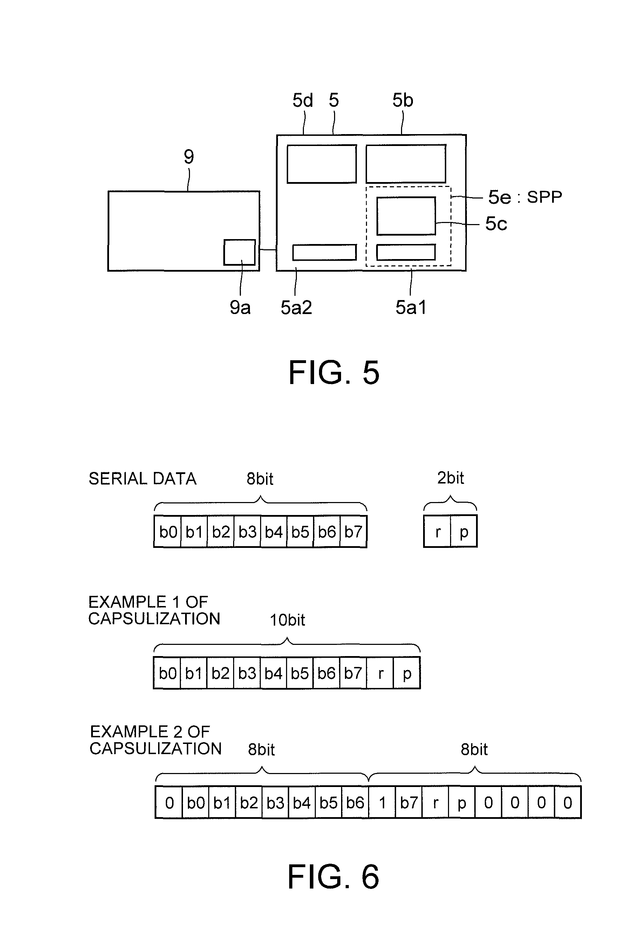

Next, a network system of a third embodiment of the invention will be described with reference to FIG. 5. The same points as those of the first embodiment are omitted, and different points will be mainly described. As shown in FIG. 5, an application 5d for notifying a state of a wireless section between a hub/ access point 1 and a device adapter 5 to a device 9 can be installed on the device adapter 5. The wireless section state notification application 5d creates a notification to notify the device 9 of a fact that communication between the hub/ access point 1 and the device adapter 5 is disconnected, and a transmission medium driver 5a2 transmits this notification to a transmission medium driver 9a of the device 9. The device 9 receives this notification, and can take various measures. For example, the device 9 itself stores data relating to an event occurring after the communication disconnection, or forcibly terminates main power supply at a time point when a specific period passes from the communication disconnection.

Next, a fourth embodiment of the invention will be described with reference to FIG. 6. The same points as those of the first embodiment are omitted, and different points will be mainly described. In general, when a device adapter 5 and a device 9 are started, an initialization process, such as establishment of synchronization between both, is required. An example in which the initialization process is performed in the network system of any one of the first to third embodiments will be described as the fourth embodiment.

The communication wiring 7 for connecting the device adapter 5 and the device 9 includes a control line for transmitting a control signal. This control line can be used for the initialization by the communication wiring 7.

FIG. 6 is a view for explaining a method of capsulizing an initialization signal using the control line and a serial signal by UART or the like. The serial signal by UART or the like and the initialization signal are respectively transmitted from the device 9 to the device adapter 5, and are capsulized by the bridge application 5b of the device adapter 5. Thereafter, the signals are transmitted to the hub/ access point 1.

In the example shown in FIG. 6, serial data of UART or the like transmitted from the device 9 to the device adapter 5 is assumed to be a character of 8 bits (b0, b1, b2, b3, b4, b5, b6, b7). Besides, the control signal transmitted through the control line is assumed to be a 2-bit data string of reset information (r) and information (p) indicating a device state. The reset information is information indicating that connection is newly established, and indicates that the subsequent bit is the information (p) indicating the device state. The information (p) indicating the device state is information indicating the state of the device 9, and is, for example, information indicating the ON/OFF state of the power supply.

Example 1 of capsulization will be described. In the example 1 of capsulization, total 10 bits including the serial data (b0, b1, b2, b3, b4, b5, b6, b7) received by the device adapter 5 and the control signal (r, p) are capsulized as one character. The capsulized character is transmitted from the device adapter 5 to the hub/ access point 1.

Example 2 of capsulization shown in FIG. 6 will be described. In the example 2 of capsulization, total 10 bits including the serial data (b0, b1, b2, b3, b4, b5, b6, b7) received by the device adapter 5 and the control signal (r, p) are divided into two characters each having a character length of 8 bits and are capsulized. An identifier (fixed value) indicating the first character in a series of serial communications is placed in the first bit of the first character. In FIG. 6, this identifier is, for example, (0). The serial data (b0, b1, b2, b3, b4, b5, b6) follows this identifier. An identifier (fixed value) indicating the second character in the series of serial communications is placed in the first bit of the next character. In FIG. 6, the identifier is, for example, (1). The data (b7) not contained in the first character is placed after this identifier, and subsequently, the control signal (r, p) is placed. A padding field follows the control signal (r, p), and (0) is padded in bits required to obtain the character length (in this example, 4 bits obtained by subtracting the already filled 4 bits from 8 bits of the character length).

While certain embodiments have been described, these embodiments have been presented by way of example only, and are not intended to limit the scope of the inventions. Indeed, the novel embodiments described herein may be embodied in a variety of other forms; furthermore, various omissions substitutions and changes in the form of the embodiments described herein may be made without departing from the spirit of the inventions. The accompanying claims and their equivalents are intended to cover such forms or modifications as would fall within the scope and spirit of the inventions.

## Claims

1. A network system comprising:
a device adapter including a first virtual communication port; and
a network connection device including a virtual device adapter protocol hierarchy, wherein
the virtual device adapter protocol hierarchy includes i) a second virtual communication port communicable with the first virtual communication port, ii) a TCP/IP layer, iii) a device controlling protocol layer in an application layer and iv) a device object.

2. The network system according to claim 1, wherein the first and second virtual communication ports are transmission drivers of one of BLUETOOTH SPP communication and 920 MHz band communication.

3. The network system according to claim 1 or 2, wherein the virtual device adapter protocol hierarchy includes a transmission driver, and the transmission driver transmits a signal notifying an event of disconnection into a network when a communication path between the first and second virtual communication ports is disconnected.

4. The network system according to any one of claims 1 to 3, further comprising a device communicable with the device adapter, wherein communication between the first and second virtual communication ports and communication between the device and the device adapter are same kind of serial communication.

5. The network system according to any one of claims 1 to 4, wherein after connection to the device is newly established, the device adapter creates a character having a specified length and including information indicating the establishment, and notifies from the first virtual communication port to the second virtual communication port.

6. A network connection device comprising a virtual device adapter protocol hierarchy, wherein
The virtual device adapter protocol hierarchy includes i) a second virtual communication port communicable with a first virtual communication port of a device adapter, ii) a TCP/IP layer, iii) a device controlling protocol layer in an application layer and iv) a device object.
